# EUROPEAN PATENT APPLICATION

(11) **EP 0 572 715 A1**
(43) Date of publication of application: **08.12.1993**
(21) Application number: 92118927.0
(22) Date of filing: 05.11.1992
(51) Int. Cl.: F16K 37/00

(54) **Check valve testing method**

(30) Priority: 02.06.1992 US 892455
(71) Applicant: COMBUSTION ENGINEERING, INC., Windsor, Connecticut 06095 (US)
(72) Inventor: Siegel, Edward A., West Hartford, Connecticut 06117 (US); Burger, Joseph M., Granby, Connecticut 06035 (US); Quinn, Joseph W., Bloomfield, Connecticut 06002 (US); Formanek, Frank J., West Suffield, Connecticut 06093 (US); Walker, Robert G., Granby, Connecticut 06035 (US); Pilipski, Walter, East Hartland, Connecticut 06027 (US)
(74) Representative: Rupprecht, Klaus, Dipl.-Ing.

(57) **Abstract**

Direct non-intrusive method of testing the operating condition and characteristics of a fluid flow check valve by mounting a sensor (50,60) inside the valve body (10). One form of sensor (50) is a proximity probe threaded in a drilled and tapped hole (50a) in the body wall which uses impedance variations which are caused by eddy currents induced in the conductive pivoted arm 24's non-symmetrical end (24a) directly adjacent probe (50). Another directly reading sensor embodiment is a strain gage shear pin (60) for pivoting arm (24). Directly sensed electrical signals represent displacement or strain magnitude changes at the hinge arm end for diagnostic use. Recording of valve signatures and comparison of later readings are used to determine and analyze degradation wear in the valve.

## Description

### METHOD OF THE INVENTION:

This invention relates to the field of testing check valves' operating conditions and characteristics.

### BACKGROUND OF THE INVENTION:

A check valve, as explained in U.S. Patent No. 4,977,778, is a type of one-way valve used in the control of fluid through conduits. A check valve permits flow of fluid in one direction through the conduit and prevents fluid flowing the opposite direction.

Conventionally, in process industries such as power plants and the like, the operability of check valves is verified during planned outages, by disassembling the valve, inspecting the valve components, and then reassembling the valve. Particularly in nuclear power plants, this conventional procedure has many disadvantages. The major disadvantage is that the valve to be inspected is itself often radioactive, or it contains residues of radioactive fluid. The typical time required for conventional verification is on the order of several hours, during which the maintenance worker may be exposed to, or must be protected from, radiation. In addition, there exists some risk that the valve will not be correctly reassembled, which could adversely affect valve performance.

Typically a fluid flow controlling check valve includes a hollow cast body with a wall defining an inner chamber with an inlet port and an opposing outlet port. Surrounding the inlet port is a valve seat. A check valve disc is positioned in the chamber on an elongated conductive metal hinge arm which has a non-symmetrical end pivotally mounted by means of an arm opening and hinge pin therein adjacent or at a location of the wall above the valve seat for movement of the disc within the body chamber toward and away from the valve seat to close and open the valve to fluid flow. Normally the valve disc pivots open away from the seat in response to flow through the valve in one direction and gravity pivots the valve disc back to the seat to close the valve to prevent flow in the opposite direction. The hinge pin may or may not penetrate the valve body wall but the other elements of a check valve are hidden from view and are accessed through an opening in the top of the valve body which is normally sealed by a bolted cap.

Accordingly, inspection of a check valve has required its removal from service for disassembly and inspection for wear and degradation unless special radiographic or ultrasonic inspection apparatus and techniques of the prior art have been utilized. The above mentioned U.S. Patent No. 4,977,778 and U.S. Patent No. 4,920,802 are merely representative examples of the use of reflected ultrasonic wave techniques for check valve diagnostics. The typical applications using valve "signatures" are disclosed in a paper: "Nuclear Valve Leak Detection by Passive Acoustic Spectrum Analysis", Badinter, C. and Dimmick, J.G. presented at the 6th International Conference on NDE in the Nuclear Industry, Zurich, 1983; American Society for Metals. See also U.S. Patent No. 4,678,621 for use of these ultrasonic principals in a network.

The problem of these techniques has been that they are not direct. They rely on energy passing through and echoing from the valve body and valve components. Accordingly, highly skilled and experienced technicians are required to analyze the valve condition with any degree of certainty using these "in-direct" techniques. The problem was noted and investigated in a report entitled: "Application Guidelines for Check Valves in Nuclear Power Plants", prepared by MPR Associates, Inc. and Kalsi Engineering, Inc. for Electric Power Research Institute (EPRI) September 1987.

### BRIEF SUMMARY OF THE INVENTION:

The present invention has been devised to provide direct readings which are easy to analyze and use for testing the operating condition and characteristics of a fluid flow check valve. It utilizes easily mounted sensors within the valve inner chamber at locations adjacent or at the upper or pivoting end of the hinge arm upon which the disc swings in order to avoid echoes and other signal distortions produced by exteriorly mounted sensors. No special valve structure such as found in French Patent No. 2478-255 is required to mount the sensors used in the novel method of the invention, accordingly they are easily retrofit to existing valves.

The key to the clear signal producing non-intrusive sensing according to the principals of the instant invention starts with the use of a sensor from the group which senses by means of electrical impedance or by means of a change of electrical resistance. An example of the former sensor is an eddy current type of proximity sensor for sensing the position or movement of a conductive member such as an end of the disc supporting hinge arm. An example of the latter sensor is a hinge pin in the form of a transducer which measures loads using a strain gage sensing element sensitive to shear or bending loads that vary with hinge arm location.

The proximity sensor is an elongated probe which can be mounted through the check valve body wall and threaded in a drilled and tapped hole above the valve seat at a position adjacent the pivoted end of the hinge arm in the valve inner chamber. Once mounted the testing is non-invasive. It senses eddy currents induced in the pivoted end of the conductive hinge arm.

The strain gage hinge pin replaces the normal hinge pin of the hinged disc supporting arm. In the case where the pin normally penetrates the valve body wall this creates no problem as the strain gage leads are attached at the pin end exposed outside of the valve body. In case the entire pin is mounted within the inner check valve chamber, the leads must be brought out a pressure sealed penetration in the valve wall or valve cap.

The sensor, in either case, is used to directly measure strain in the hinge pin, and therefore position, of the hinged arm and thus the disc. In this way electrical signals representative of displacement or strain magnitude changes at the pivoted end of the hinge arm, as the arm is moved, are positively sensed. The signals are used to provide indications and/or recordings to determine and analyze the operating condition and characteristics of the check valve and check valve elements.

The method and technique of use includes repeating the steps of directly sensing to create electrical signals and recording so that initially recorded "signature" indications taken before an interval of valve operating time can be compared to later indications to enhance determining and analyzing the operating condition and characteristics of the check valve with respect to degradation and wear of the check valve elements during the interval of valve operating time.

### BRIEF DESCRIPTION OF THE DRAWINGS:

Fig. 1 is a schematic side elevational view in section of a typical swing check valve having a proximity probe of the type which uses impedance variations caused by eddy currents induced in one end of the elongated conductive hinge arm, said probe mounted at a valve body wall location directly adjacent said hinge arm end and showing a hinge pin in section which can be a strain gage sensor for use instead of the proximity probe in the method of the invention.

Fig. 2 is an actual indication or trace of a signal made by two rapid open/close cycles and a slower open/close cycle of a swing valve using a proximity probe mounted substantially as shown in Fig. 1.

Fig. 3 is an exploded perspective view of an alternative design of swing check valve of slightly different design from that shown in Fig. 1 with a hinge shear pin strain gage sensor.

### DETAILED DESCRIPTION OF THE PREFERRED EMBODIMENTS:

The numeral 10 generally designates the body of a typical swing type check valve as may be found in use, for example, in a nuclear steam supply system at a nuclear power generating facility.

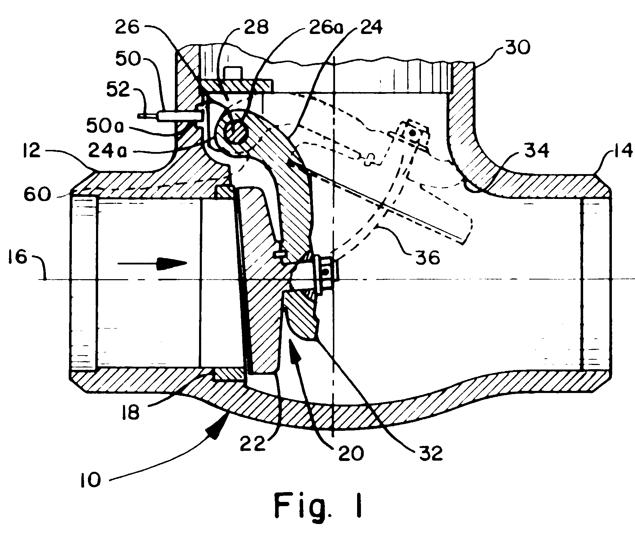

The valve body 10, as shown in Fig. 1 includes an inlet 12 and an outlet 14 which are aligned about a flow axis 16. At the interior end of the inlet 12 a ring valve seat 18 is provided for interacting with a closure member 20 having a disc 22 in one of two modes. When the valve is open for flow in the permitted flow direction, the closure member 20 is swung away from the seat 18, to the position shown dotted in Fig. 1 on a hinged arm 24. Full flow is thereby permitted through the valve. In the event of a reverse flow the closure member 20 must seal against the valve seat 18 by means of gravity and force of flow to prevent the reverse flow.

The disc 22 of closure member 20 is adapted for sealing engagement with the seat 18. Swing or hinged arm 24 is pivoted by means of a hinged arm opening and hinge pin 26 to a yoke 28. The yoke 28 is rigidly supported at the lower portion of valve bonnet 30. When flow in the permitted direction is initiated, the arm 24 swings upward until the land surface 32 thereof contacts the valve body surface 34 where the bonnet 30 begins. The disc 22 thus has an arc of hinged motion indicated at 36 between a fully closed position and the fully open position dotted-in in Fig. 1.

As the hinged arm 24 swings upwardly, the disc 22 leaves valve seat 18, thus opening the valve. One of the recognized causes of check valve mis-operation is the sudden, high pressure initiation of flow in the permitted direction through the valve. The force with which the closure member 20 swings away and contacts the surface 34 is so great that the arm 24 or the hinge pin 26 are bent or otherwise damaged with the closure member 20 sticking in the upward position or having only limited freedom of movement on the hinged arm opening 26a and hinge pin 26.

According to the present invention, a proximity probe 50 is mounted in a drilled and tapped hole through the wall of the valve body 10 at a location of the wall directly adjacent the end 24a of the hinge arm 24. The end 24a of the hinge arm 26 is non-symmetrical and conductive such that the proximity probe 50 can create a clear indication of the arm end 24a position and displacement. If the original valve arm end 24a is symmetrical, a small amount of the conductive arm material is removed as part of the method to render it non-symmetrical.

The proximity probe 50 is, typically, one such as supplied by Kaman Instrumentation Corporation, (Kaman), P.O. Box 7463, Colorado Springs, CO 80933 under the model number KD-2300-2S with its attendant signal conditioner electronics consisting of a matched oscillator, linearization network, amplifiers and a demodulator which provides an analog voltage directly proportional to displacement. A Kaman Model P-3100 or P-3000 Power Supply is preferably used in the setup with power and output cable from Kaman.

For installation in an extreme environment, as is present in Nuclear Steam Supply Systems, a Kaman High Temperature Displacement Sensor with sealed, all laser welded, Inconel cases and mineral-insulated cable 52 such as Model KD1925 is preferred. It has a .312 inch (7.92 mm) 24 thread Inconel 718 body. This body of proximity probe 50 is screwed into the drilled and tapped hole 50a directly adjacent one end of hinge arm 24 in a manner which requires no re-qualification for nuclear use because the penetration of the pressure barrier is less than 25.4 mm (1 inch), "NPS 1 or smaller" under Article IWB-1000 and IWA-7400 ASME regulations as adopted in 10 Code of Federal Regulations. Alternatively, the penetration of the pressure boundary can be sealed in a mounting hole by welding or other appropriate means.

The alternative sensor 60 when used in the Fig. 1 check valve does not require mounting in the wall of the valve body 10, except to accommodate leads, but instead replaces hinge pin 26 in opening 24a in the end of elongated conductive hinge arm 24. The sensor 60 is adjacent the same location on the wall of valve body 10 that is penetrated when proximity probe 50 is used but does not require penetration of the wall by drilling and tapping. The hinge pin sensor 60 acts as a strain gage to measure load by variation of electrical resistance under strain produced by the displacement of valve disc 22 and arm 24.

A shear pin transducer utilizing a strain gage bridge to measure pin shear loading for this purpose is available from Teledyne Engineering Services, Brewer Engineering Laboratories, P.O. Box 288, Marion, MA 02738. In installing the shear pin sensor 60, sensor leads 52 from one end may be taken out through a sealed penetration 50a of the type which is provided for proximity probe 50a or through another suitable penetration, preferably, in this installation the pin sensor 60 will be fixed in yoke 28 such that the arm end opening 24a rotates around it.

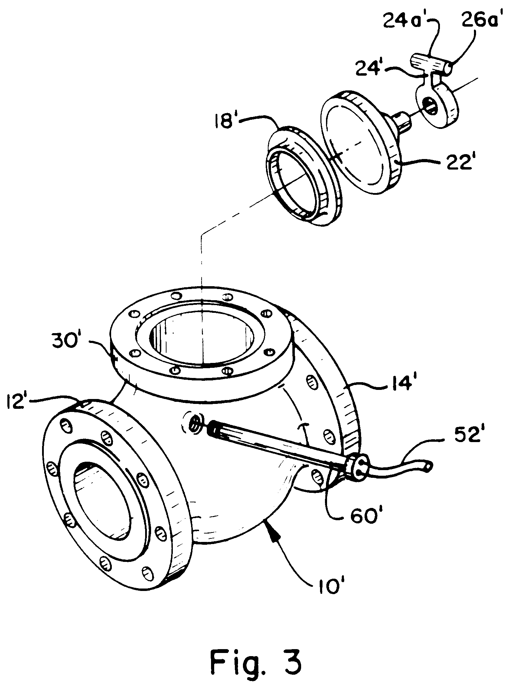

If the swing type valve is of the type where the hinge pin is mounted through the wall of the valve body 10', Fig. 3, (where like numerals are primed) the same measurement of the shear loading by means of the shear pin sensor 60 is used as described above and the arm 24 is free to rotate relative to the shear pin sensor 60.

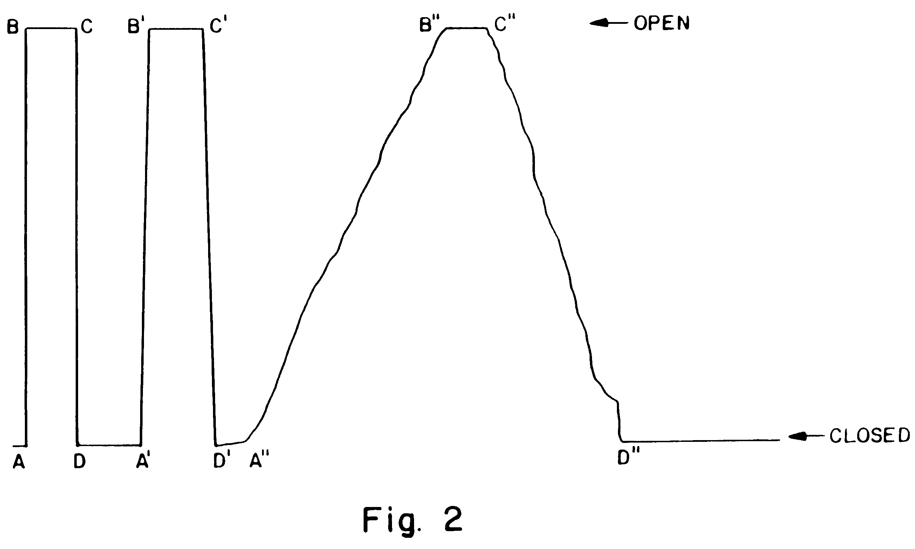

During operation of the probe 50 in the field on a check valve of Fig. 1 with a body 10, the check valve closure member 20 is opened and closed as the hinge arm 24 rotates about the hinge pin 26. The outer surface of the hinge arm end 24a nearest the probe 50 is eccentric or non-symmetrical and will, via the above described signal conditioning electronics, provide electrical signals representative of the displacement of the end 24a of hinge arm 24. As seen in Fig. 2, if the valve closure member 20 is moved quickly from opened to closed positions, steep curves A,B,C,D and A' ,B' ,C' ,D' are produced by a tracing recorder or the like connected to the output of the signal conditioning apparatus. If a slower opening and closing operation is performed a less sharp curve A'',B'',C'',D'' is produced by the stylus of the recorder. A suitable recorder for this purpose is a Model MS411B stock AC Miniservo^{R} strip-chart recorder from Esterline Angus, Indianapolis, IN, an Esterline Company. An electronic data recorder and storage medium can also be utilized for "signature" identification and evaluation. A preferred electronic recorder for this purpose is AirCet™ from ABB Combustion Engineering. See U.S. Patenbt No. 5,056,046.

The proximity probe 50 will directly measure the distance to the hinge arm or the shear pin strain gage 60 will directly measure loading during the valve stroke, and will via the signal condition electronics and recorder produce a valve signature.

Once the check valve is modified for the sensing device and setup initially, future direct diagnostics are non-intrusive and the results are compared to the initial signature. This diagnostic approach provides a direct measurement of check valve operability and stroke parameters.

## Claims

1. Method of testing the operating condition and characteristics of a fluid flow check valve, said valve including a body having a wall and inner chamber, a check valve disc positioned in said chamber on an elongated conductive hinge arm which is pivotally mounted adjacent said wall by means of an arm opening adjacent one end of said hinge arm and a hinge pin for movement of the disc within the body chamber toward and away from a valve seat to close and open said valve to fluid flow, said method characterized by the steps of:
mounting a sensor from the group which senses by means of a change of electrical impedance or by means of a change of electrical resistance within said body chamber at or adjacent a location of said wall directly adjacent said one end of said hinge arm;
directly sensing to create electrical signals representative of displacement or strain magnitude changes at said one end of said hinge arm as the arm is moved; and
providing indications of said signals made to determine and analyze the operating condition and characteristics of the check valve and check valve elements.

2. The method of claim 1 in which the step of providing indications includes the step of recording the created electrical signals representative of displacement or strain magnitude changes.

3. The method of claim 2 which includes repeating the steps of sensing to create electrical signals, providing indications and recording, after an interval of valve operating time to create a new recording of the new set of created electrical signals; and,
comparing the initially produced recording of the created electrical signals with the newly produced recording of created electrical signals to determine and analyze the operating condition and characteristics of the check valve with respect to degradation and wear of said check valve elements during said interval of valve operating time.

4. The method of claim 1 in which impedance variations which are caused by eddy currents induced in said one end of said elongated conductive hinge arm are sensed.

5. The method of claim 4 in which the step of mounting a sensor includes mounting a proximity probe through said wall at said location directly adjacent said one end of said hinge arm.

6. The method of claim 1 in which the step of mounting a sensor at or adjacent the location of said wall directly adjacent said one end of said hinge arm includes mounting a strain gage acting hinge pin in said hinge arm opening.

7. The method of claim 6 in which the step of mounting a sensor at or adjacent a location of said wall directly adjacent said one end of said hinge arm includes mounting a sensor above said valve seat adjacent an unsymmetrical portion of said hinge arm.

8. The method of claim 1 in which a step of rendering said one end of said hinge arm non-symmetrical is included.
